# EUROPÄISCHE PATENTANMELDUNG

(11) **EP 1 480 027 A1**
(43) Veröffentlichungstag der Anmeldung: **24.11.2004**
(21) Anmeldenummer: 04010876.3
(22) Anmeldetag: 07.05.2004
(51) Int. Cl.: G01J 5/12

(54) **System zur Objekt-Erfassung für Fahrzeuge**

(30) Priorität: 22.05.2003 DE 10323707
(71) Anmelder: DaimlerChrysler AG, 70567 Stuttgart (DE)
(72) Erfinder: Dickmann, Jürgen, 89079 Ulm (DE); Mekhaiel, Moheb, 89233 Neu-Ulm (DE)

(57) **Zusammenfassung**

Die Erfindung betrifft ein System zur Objekterkennung für Fahrzeuge, das insbesondere geeignet ist, ungeschützte Verkehrsteilnehmer, wie z.B. Radfahrer oder Fußgänger, zu identifizieren. Hierzu wird eine Kombination (1) aus Thermopiles (2) vorgeschlagen, deren Erfassungsbereich den wesentlichen Bereich vor, bzw. hinter einem Fahrzeug abdeckt. Durch Detektion der vom Objekt abgegebenen Wärmestrahlung und Analyse der Meßsignale in einer Auswerteeinheit (5) ist das System in der Lage, Personen von anderen Objekten zu unterscheiden. In Verbindung mit Fahrtparametern, wie z.B. Geschwindigkeit und Lenkwinkel, kann das System eine drohende Kollision mit einem Fußgänger oder Radfahrer rechtzeitig erkennen und entsprechende Maßnahmen auslösen.

## Beschreibung

Die Erfindung betrifft Systeme zur Erkennung von Objekten. Derartige Systeme sind insbesondere wichtig für Kraftfahrzeuge, um im Verkehr kritische Annäherung an Hindernisse, andere Fahrzeuge und insbesondere ungeschützte Verkehrsteilnehmer (Fussgänger, Radfahrer etc.) möglichst frühzeitig zu erkennen. Dazu muss ein Erkennungssystem entsprechende Objekte einerseits schnell erfassen und dabei Personen von anderen Objekten unterscheiden können.

Bekannte Systeme zur Objekterfassung sind beispielsweise Einrichtungen, die auf der Verwendung von Ultraschallwellen oder Infrarotstrahlung beruhen. Bei diesen Einrichtungen werden mittels eines Sendeteils vom Fahrzeug aus Ultraschallsignale oder Infrarotlicht in den relevanten Umgebungsbereich ausgesendet und die von Objekten reflektierten Anteile über einen oder mehrere Empfänger aufgenommen. Zur Bestimmung von Lage und/oder Entfernung von Objekten werden dann die empfangenen Signale analysiert (z.B. Zeitdifferenz, Intensität, Phase).

Nachteilig ist bei solchen Anordnungen, dass die Übertragung der Signale durch die Luft je nach Witterungslage (Nebel, Regen, Staub) mit unterschiedlichen Störungen behaftet ist, die eine Auswertung erschweren und bei der Objekterfassung zu falschen Ergebnissen führen können. Auch können die verschiedenen Objektarten nur sehr grob, beispielsweise bzgl. Größe, oder gar nicht unterschieden werden.

In der EP 0546928 B1 wird eine erweiterte Anordnung zur Erfassung und besseren Identifizierung von Hindernissen für Fahrzeuge vorgeschlagen, die zwei verschiedene Sondierungsarten miteinander kombiniert. Zur räumlichen Erfassung von Objekten werden über eine oder mehrere Reihen von Leuchtdioden Pulse (Mikrosekunden) von Infrarotlicht mit unterschiedlichem Abstrahlwinkel ausgesendet und die von Hindernissen reflektierten Infrarotanteile durch eine Matrix aus Photodioden aufgenommen. Durch Auswertung wird damit zunächst ein gewisses Abbild der räumlichen Verteilung von vorhandenen Objekten beispielsweise im Frontbereich des Fahrzeugs erfaßt. Zur weiteren Unterscheidung der Objekte untereinander wird über einen in die Anordnung integrierten pyroelektrischen Detektor die von (wärmeren) Objekten selbst ausgesandte Thermostrahlung erfaßt. Ziel dieser Anordnung ist es, durch Auswertung der verschiedenen Signalanteile über eine Rechnereinheit Fahrzeuge aufgrund ihrer Wärmeentwicklung gegenüber anderen Hindernissen zu identifizieren.

Diese Anordnung hat den Nachteil eines durch die verschiedenen Sende- und Empfangsvorrichtungen bedingten relativ hohen technischen Aufwands, verbunden mit einer entsprechenden Störanfälligkeit. So kann einerseits die räumliche Objekterfassung mittels IR-Pulsen z.B. durch starken Regen, Schnee, Staub, aufgewirbelte Blätter etc. gestört werden und/oder die thermische Sondierung von Wärmequellen z.B. durch im Sommer stark erhitzten Strassenbelag oder bei Fahrt in Richtung tiefstehender Sonne ausfallen.

Für eine zuverlässige Identifizierung gerade der besonders gefährdeten ungeschützten Verkehrsteilnehmer wie Radfahrer und Fussgänger ist diese Anordnung nicht konzipiert und auch ungeeignet, da Personen - verglichen mit Fahrzeugen - nur eine relativ schwache Körperwärme abgeben. Die hier eingesetzten pyroelektrischen Detektoren reagieren zudem nur sprunghaft auf relativ abrupt auftretende Unterschiede der von Objekten abgegebenen Wärmestrahlung, d.h. die Absolutwerte werden nicht erfaßt. Mehrere unterschiedlich warme Quellen (Fahrzeughaube, Motorradauspuff, Passant) im "Sichtfeld" des Detektors werden damit qualitativ nicht unterschieden.

Die vorliegende Erfindung geht aus von dieser Anordnung als nächstliegendem Stand der Technik. Aufgabe der vorliegenden Erfindung ist es, ein alternatives Objekterfassungssystem für einen Einsatz in Fahrzeugen zu entwickeln, das geeignet ist insbesondere auch ungeschützte Verkehrsteilnehmer, wie Fussgänger etc. zu identifizieren.

Diese Aufgabe wird gelöst durch das Objekterfassungssystem mit den charakterisierenden Merkmalen des Hauptanspruchs 1. Weitere Details und vorteilhafte Ausführungsformen der Erfindung sind Gegenstand der Unteransprüche.

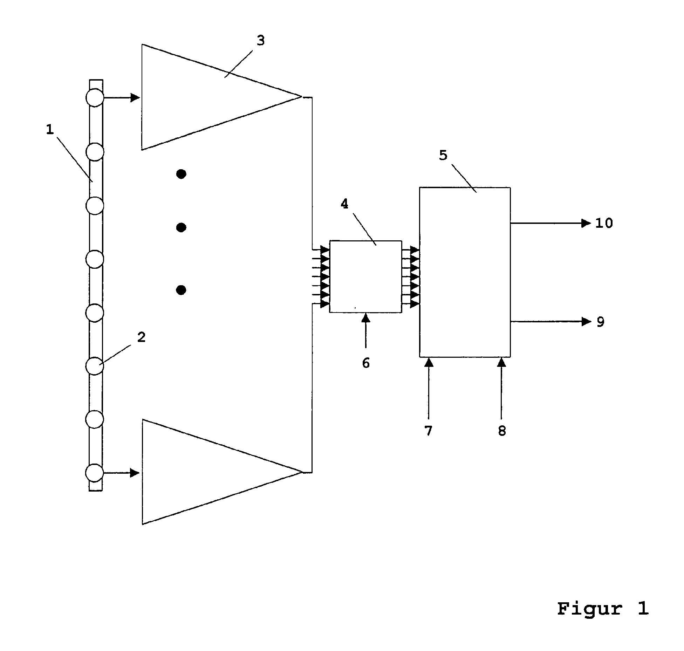

Die Erfindung wird im Folgenden näher erläutert. In Figur 1 ist ein Ausführungsbeispiel abgebildet.

Die Erfindung nutzt die Tatsache, dass alle Objekte elektromagnetische Wellen ausstrahlen. Der jeweilige Frequenzbereich ist dabei wesentlich von der Temperatur des Objektes abhängig. Je wärmer ein Objekt ist, desto höher die ausgestrahlte Energie. Das spektrale Maximum der Strahlung eines Fußgängers mit ca. 37°C Körpertemperatur liegt beispielsweise bei einer Wellenlänge von etwa 10 Mikrometer.

Da die Körpertemperatur eines Menschen in engen Grenzen konstant ist, ist es möglich, mittels geeigneter wellenlängensensitiver Sensoren, einen Radfahrer oder Fußgänger im Strassenverkehr von anderen Objekten zu unterscheiden, sofern deren Temperaturen niedriger oder höher sind.

Als Sensoren für die IR-Detektion im Bereich zwischen 8-14 µm eigenen sich Thermopile-Detektoren hervorragend. Sie können für dieses Einsatzfeld ohne Kühlung betrieben werden, besitzen ein gutes Einschwingverhalten und sind kommerziell relativ günstig erhältlich. Sie können im Gegensatz zu Pyrodetektoren, sowohl dynamische als auch statische Objekte erfassen. Somit unterscheiden sie sich wesentlich von den Pyrodetektoren, die z.B. in PIR-(Passive-Infra-Red) Bewegungsmeldern eingesetzt werden und nur auf Temperaturänderungen reagieren können.

Die im Vergleich zu Pyrodetektoren etwas geringere Empfindlichkeit beschränkt für Thermopiles die maximal detektierbare Entfernung. Dieser Nachteil kann aber mit geeigneter Optik kompensiert werden. So kann z.B. durch Reduktion des Erfassungswinkels (Field of View, FOV) auf 10° Öffnungswinkel oder weniger die Empfindlichkeit so angepaßt werden, dass ein Fußgänger auch bei Entfernungen von bis zu 10m noch sicher erkannt wird. Solche optischen Ergänzungen können entweder als separater Zusatz (Linse, Spiegel) vorgeschaltet oder bereits im Themopile-Gehäuse integriert werden (z.B. beim Detektor TPS334L10.6 von Perkin-Elmer Optoelectronics oder ST60 von Dexter Research).

Um die Ortsempfindlichkeit bzw. den räumlichen Erfassungsbereich des erfindungsgemäßen Objekterfassungssystems zu erhöhen, können mehrere Thermopiles zusammengeschaltet werden. Beispielsweise kann eine Anzahl von Thermopiles als Zeile linear aneinandergereiht werden, so dass sich die Erfassungsbereiche in einer Ebene überdecken. Auch können mehrere solcher Zeilen aus Thermopiles kombiniert werden und so z.B. auch 2-dimensionale Arrays aufgebaut werden. Damit kann jede gewünschte Form des Erfassungsbereichs gestaltet werden.

Arrays aus Thermopiles sind - auch integriert auf einem Chip
- kommerziell erhältlich. Bei solchen Kombinationen sind die Thermopiles üblicherweise äquidistant angeordnet, andere Anordnungen mit unterschiedlichen Abständen der Detektoren können je nach Einsatzkonditionen u.U. vorteilhafter sein (z.B. für höhere Empfindlichkeit und Ortsauflösung im Frontbereich des Fahrzeugs).

In Figur 1 ist als Ausführungsbeispiel eine lineare Konfiguration (1) aus acht Thermopiles (2) dargestellt. Dabei ist die Anordnung so gewählt, dass sich die optischen Erfassungsbereiche der benachbarten Detektoren überlappen. Die einzelnen Signale der Thermopiles werden über Verstärkerstufen (3) aufbereitet. Diese Verstärkerstufen sind vorzugsweise so ausgelegt, dass auch eine erste elektronische Bereinigung der Signale von Störanteilen erfolgen kann (Unterdrückung von Rauschanteilen, Temperaturkompensation, usw.).

Den Verstärkern nachgeschaltet sind in diesem Ausführungsbeispiel Mittel (4) zur weiteren Signalaufbereitung. Hier erfolgt - z.B. durch Vergleich mit zugeführten Referenzwerten (6) - eine Meßsignalkorrektur. Dabei können Referenzwerte beispielsweise von einem oder mehreren separaten Referenzthermopiles geliefert werden (nicht dargestellt), oder auch als gespeicherte Werte vorliegen.

Die so aufbereiteten Signale werden dann einer Auswerteeinheit (5) zugeleitet. In dieser Auswerteeinheit werden einzelne Signalanteile jeweils bezogen auf die verschiedenen Thermopiles auf vorgegebene Kriterien analysiert, z.B. Maximumbestimmung, dynamische Veränderung, Über-/Unterschreiten von Schwellenwerten, Intensitätsverteilung über die Sensorzeile und zeitliche Änderung dieser Intensitätswerte usw.

Über die Signalverarbeitung können unterschiedlich warme Quellen (Personen, PKW, Motorradauspuff) unterschieden werden und auch beispielsweise Größe, Position und Entfernung der von den Thermopiles erfassten Objekte bestimmt werden.

Elemente der Signalauswertung (5) können vorzugsweise als Mikroprozessorsystem ausgebildet sein. Dies bietet auch die Möglichkeit einer Objektklassifikation durch Vergleich der aktuellen Signalanteile mit gespeicherten Daten. So kann beispielsweise ein Fußgänger anhand charakteristischer Signalkonstellationen und/oder -veränderungen schnell und zuverlässig identifiziert werden.

In einer erweiterten Ausführungsform werden der Auswerteeinheit (5) zusätzlich Signale über Fahrtparameter des Kraftfahrzeugs übermittelt. In Figur 1 ist dies durch die Eingangsports (7) und (8) dargestellt. Als Parameter können beispielsweise die aktuelle Fahrzeuggeschwindigkeit, Lenkradwinkel oder Brems-Verzögerungswerte in die Signalauswertung mit einbezogen werden. Dies führt dazu, dass das System fahrtbedingte dynamische Veränderungen der von den Thermopiles gelieferten Signale in den Auswertungsprozess einbezieht und so eine verringerte Fehlerquote aufweist. Auch kann die Größe oder Entfernung eines Objekts durch Berücksichtigung der eigenen Fahrzeugbewegung abgeschätzt werden.

Die Erkennungsgenauigkeit kann noch weiter erhöht werden, wenn zusätzlich zu den Thermopiles andere Sensoren zur Umgebungserfassung vorhanden sind, wie z.B. Nahbereichsradar, Ultraschall- oder Laserscanner und deren Signale in die Auswertung mit einbezogen werden.

Wie in Figur 1 dargestellt weist das System Ausgangsports (9, 10) auf, über die Objektinformationen, Warnsignale oder auch Steuersignale weitergegeben werden. So können beispielsweise die erfassten Objekte mit entsprechenden Identifikationssymbolen dem Fahrer über eine optische Einblendung auf Displays angezeigt werden, bei kritischer Annäherung und Geschwindigkeit optische oder akustische Warnsignale ausgelöst, oder u.U. - bei Kollisionsgefahr - ein direkter Eingriff ins Fahrtgeschehen (z.B. Bremseinsatz) bewirkt werden.

Das in diesem Ausführungsbeispiel vorgeschlagene Array besteht aus einer Zeile mit äquidistant angeordneten Einzelsensoren, die an einem geeigneten Ort am Fahrzeug, wie z.B. an der Stoßstange, angebracht werden könnte. Da an einem Fahrzeug nicht in allen Fällen die Anbringung einer solchen Detektorzeile möglich ist, kann die tatsächliche Anordnung unter Berücksichtigung der möglichen Einbaupositionen optimiert werden. Der vertikale, sowie der horizontale Neigungswinkel der Module kann dabei unter Berücksichtigung der geometrischen Vorgegebenheiten variiert werden.

## Patentansprüche

1. System für Fahrzeuge zur Identifizierung von Objekten im Strassenverkehr, insbesondere Personen, wobei Sensoren (2) vorhanden sind, die auf Wärmequellen reagieren, Mittel (3) zur Verstärkung sowie Mittel (5) zur Auswertung der von den Sensoren gelieferten Signale,
**dadurch gekennzeichnet,**
**dass** die Sensoren aus Thermopiles bestehen.

2. System nach Anspruch 1,
**dadurch gekennzeichnet,**
**dass** die Sensoren (2) als Array oder Matrix angeordnet sind.

3. System nach Anspruch 1 oder 2,
**dadurch gekennzeichnet,**
**dass** die Mittel (3) zur Verstärkung auch Komponenten zur Filterung bzw. Kompensation störender Signalanteile aufweisen.

4. System nach einem der Ansprüche 1, 2 oder 3,
**dadurch gekennzeichnet,**
**dass** Mittel (4) zur Signalkorrektur, z.B. über Referenzwerte, vorhanden sind.

5. System nach einem der Ansprüche 1 bis 4,
**dadurch gekennzeichnet,**
**dass** die Mittel (5) zur Auswertung der Sensorsignale mit einem Mikroprozessor ausgestattet sind.

6. System nach einem Ansprüche 1 bis 5,
**dadurch gekennzeichnet,**
**dass** die Mittel (5) zur Auswertung der Sensorsignale Elemente zur Speicherung von Daten aufweisen.

7. System nach einem der Ansprüche 1 bis 6,
**dadurch gekennzeichnet,**
**dass** die Mittel (5) zur Auswertung der Sensorsignale einen oder mehrere Eingangsports (7, 8) aufweisen, über die zusätzliche Signale über Fahrtparameter, z.B. Fahrzeuggeschwindigkeit, Lenkbewegungen usw., zur Auswertung herangezogen werden.

8. System nach einem der Ansprüche 1 bis 7,
**dadurch gekennzeichnet,**
**dass** die Mittel (5) zur Auswertung der Sensorsignale einen oder mehrere Ausgangsports (9, 10) aufweisen, über die im Fall erkannter Objekte Signale, z.B. an Anzeigeelemente, Displays usw., ausgegeben werden.

9. System nach Anspruch 8,
**dadurch gekennzeichnet,**
**dass** die Mittel (5) zur Auswertung der Sensorsignale im Fall kritischer Annäherung des Fahrzeugs an erkannte Objekte, über Ausgangsports (9, 10) Warnsignale ausgeben.

10. System nach Anspruch 8 oder 9,
**dadurch gekennzeichnet,**
**dass** die Mittel (5) zur Auswertung der Sensorsignale im Fall kritischer Annäherung des Fahrzeugs an erkannte Objekte, über Ausgangsports (9, 10) Signale ausgeben, die Komponenten der Fahrzeugsteuerung (z.B. Bremsanlage) ansteuern.
